# EUROPEAN PATENT APPLICATION

(11) **EP 3 148 127 A1**
(43) Date of publication of application: **29.03.2017**
(21) Application number: 16186641.3
(22) Date of filing: 31.08.2016
(51) Int. Cl.: H04L 12/721, H04L 12/18, H04L 12/761, H04L 12/723

(54) **EGRESS PROTECTION FOR BUM TRAFFIC WITH LINK FAILURES IN EVPN**

(30) Priority: 31.08.2015 US 201514841461
(71) Applicant: Juniper Networks, Inc., Sunnyvale, CA 94089 (US)
(72) Inventor: SINGH, Nitin, Freemont, CA California 94539 (US); ARORA, Kapil, 560066 Banglaore (IN); MALALI, Sunil Kumar, 560066 Bangalore (IN)
(74) Representative: D Young & Co LLP

(57) **Abstract**

In some examples, a method includes receiving, by a first provider edge (PE) network device, an egress protection label that is advertised by a second PE network device, wherein each of the first and second PE network devices are included in an Ethernet segment, wherein the first PE network device is a designated forwarder for BUM network packets in the Ethernet segment, and wherein a CE network device is multi-homed to the first and second PE network devices; in response to detecting a link failure, configuring forwarding information of the first PE network device to apply the egress protection label to the BUM network packets received by the first PE network device and forward the BUM network packets to the second PE network device; and in response to receiving the BUM network packets, forwarding the BUM network packets with the egress protection label to the second PE network device.

## Description

### TECHNICAL FIELD

The present disclosure relates to computer networks and, more specifically, to forwarding network traffic within computer networks.

### BACKGROUND

A computer network is a collection of interconnected computing devices that can exchange data and share resources. Example network devices include layer two devices that operate within the second layer (L2) of the Open Systems Interconnection (OSI) reference model, i.e., the data link layer, and layer three devices that operate within the third layer (L3) of the OSI reference model, i.e., the network layer. Network devices within computer networks often include a control unit that provides control plane functionality for the network device and forwarding components for routing or switching data units.

An Ethernet Virtual Private Network (EVPN) may be used to extend two or more remote layer two (L2) customer networks through an intermediate layer three (L3) network (usually referred to as a provider network), in a transparent manner, i.e., as if the intermediate L3 network does not exist. In particular, the EVPN transports L2 communications, such as Ethernet packets or "frames," between customer networks via the intermediate network. In a typical configuration, provider edge (PE) network devices (e.g., routers and/or switches) coupled to the customer edge (CE) network devices of the customer networks define label switched paths (LSPs) (also referred to as pseudowires) within the provider network to carry encapsulated L2 communications as if these customer networks were directly attached to the same local area network (LAN). In some configurations, the PE network devices may also be connected by an IP infrastructure in which case IP/GRE tunneling or other IP tunneling can be used between the network devices.

As the PE network devices in an EVPN forward Ethernet frames, the PE network devices learn L2 state information for the L2 customer networks. The L2 state information may include media access control (MAC) addressing information for the CE network devices and customer equipment within the customer network and the physical ports of the PE network device through which the customer devices are reachable. The PE network devices typically store the MAC addressing information in L2 learning tables associated with each of their physical interfaces. When switching an individual Ethernet frame having a given destination MAC address, a PE network device typically broadcasts the Ethernet frame to all of its physical ports unless the PE network device has previously learned the specific physical port through which to the destination MAC address is reachable. In this case, the PE network device forwards a single copy of the Ethernet frame out the associated physical port.

In an EVPN, MAC learning between PE network devices occurs in the control plane rather than in the data plane (as happens with traditional bridging) using a routing protocol. For example, in EVPNs, a PE network device typically uses the Border Gateway Protocol (BGP) (i.e., an L3 routing protocol) to advertise to other provider edge network devices the MAC addresses learned from the local consumer edge network devices to which the PE network device is connected. A PE device may use BGP route advertisement message to announce reachability information for the EVPN, where the BGP route advertisement specifies one or more MAC addresses learned by the PE network device instead of L3 routing information.

In an EVPN configuration referred to as active-active mode, an Ethernet segment includes multiple PE network devices that provide multi-homed connectivity for one or more local customer network devices. Moreover, the multiple PE network devices provide transport services through the intermediate network to a remote PE network device, and each of the multiple PE network devices in the Ethernet segment may forward Ethernet frames in the segment for the customer network device. In active-active mode, one of the multiple PE network devices for the Ethernet segment is dynamically elected as the designated forwarder for so called "BUM" traffic (Broadcast, Unidentified Unicast or Multicast traffic) that is to be flooded within the EVPN based on the MAC addressing information received from the other PE routers. The remaining PE network devices that provide the customer network device multi-homed connectivity in the Ethernet segment are configured as backup designated forwarders. When a network failure occurs with respect to the current designated forwarder, the backup PE network devices may execute a designated forwarder election algorithm to determine which of the backup PE network devices will become the new designated forwarder and, as a result, assume responsibility for forwarding L2 communications for the customer network device.

### SUMMARY

The invention is defined in the appended claims.

The techniques described herein extend existing EVPN protocol signaling mechanisms with an egress protection label to prevent duplicate copies of BUM network packets from being sent by separate PE network devices of an Ethernet segment to the same CE network device in the event of a link failure. Multiple CE network devices for different Ethernet segments may each be multi-homed to at least two PE network devices in the Ethernet segment. Each Ethernet segment may have one PE network device that is a primary designated forwarder (DF) responsible for flooding BUM network packets within the Ethernet segment and at least one other PE network device that is a backup DF. In accordance with techniques of this disclosure, each of the PE network devices may advertise, for each of its respective Ethernet segments, an Auto-Discovery (AD) route per Ethernet Segment Identifier (ESI) message that includes a BGP extended community with a respective egress protection label.

In the event that a link fails between a primary DF and a first CE network device in a first Ethernet segment, the primary DF may forward BUM network packets with the egress protection label to the backup DF PE that is also multi-homed to the first CE network device in the first Ethernet segment. If a second CE network device for a second Ethernet segment is multi-homed to the backup DF and primary DF, the backup DF for the first Ethernet segment may, based on the egress protection label, forward to the BUM network packets to CE network devices in the first Ethernet segment for which the link has failed. That is, rather than flooding the BUM network packets received from the primary DF to each CE network device, the backup DF for the first Ethernet segment may forward the packets only to CE network devices in a particular Ethernet segment that corresponds to the egress protection label appended to the BUM network packets. In this way, in the event of a link failure in the first Ethernet segment, if a PE network device is the primary DF for the first and second Ethernet segments and still floods the BUM network packets to the second Ethernet segment, the backup DF for the first and second Ethernet segments does not also send the BUM network packets to the second Ethernet segment.

In some examples, a method includes: receiving, by a first provider edge (PE) network device, an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a Customer Edge (CE) network device is multi-homed to the first and second PE network devices in the Ethernet segment; in response to detecting a link failure of a link that couples the first PE network device and the CE network device, configuring, by the first PE network device, forwarding information of the first PE network device to apply the egress protection label to the BUM network packets received by the first PE network device and forward the BUM network packets to the second PE network device; and in response to receiving the BUM network packets, forwarding, by the first PE network device, the BUM network packets with the egress protection label to the second PE network device, such that the egress protection label causes the second PE network device to forward the BUM network packets to the CE network device in the Ethernet segment.

In some examples, a device, wherein the device is a first provider edge (PE) network device, the device includes: a routing engine that receives an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment; wherein the routing engine, in response to detecting a link failure of a link that couples the first PE network device and the CE network device, configures forwarding information of the first PE network device to apply the egress protection label to the BUM network packets received by the first PE network device and forward the BUM network packets to the second PE network device; and a forwarding unit that, in response to receiving the BUM network packets, forwards the BUM network packets with the egress protection label to the second PE network device, such that the egress protection label causes the second PE network device to forward the BUM network packets to the CE network device in the Ethernet segment.

In some examples, a computer-readable medium comprising instructions for causing at least one programmable processor of a first PE network device to: receive an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment; in response to detecting a link failure of a link that couples the first PE network device and the CE network device, configure forwarding information of the first PE network device to apply the egress protection label to the BUM network packets received by the first PE network device and forward the BUM network packets to the second PE network device; and in response to receiving the BUM network packets, forward the BUM network packets with the egress protection label to the second PE network device, such that the egress protection label causes the second PE network device to forward the BUM network packets to the CE network device in the Ethernet segment.

The details of one or more embodiments of the disclosure are set forth in the accompanying drawings and the description below. Other features, aspects, and advantages of the disclosure will be apparent from the description and drawings, and from the claims.

### BRIEF DESCRIPTION OF DRAWINGS

Embodiments of the disclosure will now be described with reference to the accompanying drawings, throughout which like parts may be referred to by like references, and in which:
FIG. 1 is a block diagram illustrating an example system, in accordance with techniques of the disclosure.
FIG. 2 illustrates an example format of a BGP extended community data structure to be embedded within an AD route per ESI message advertised by each multi-homed PE router of an Ethernet segment, in accordance with techniques of the disclosure.
FIG. 3 is a block diagram illustrating further details of an example PE router, in accordance with techniques of the disclosure.
FIG. 4 is a flowchart illustrating example operations of multiple network devices in accordance with techniques of the disclosure.

### DETAILED DESCRIPTION

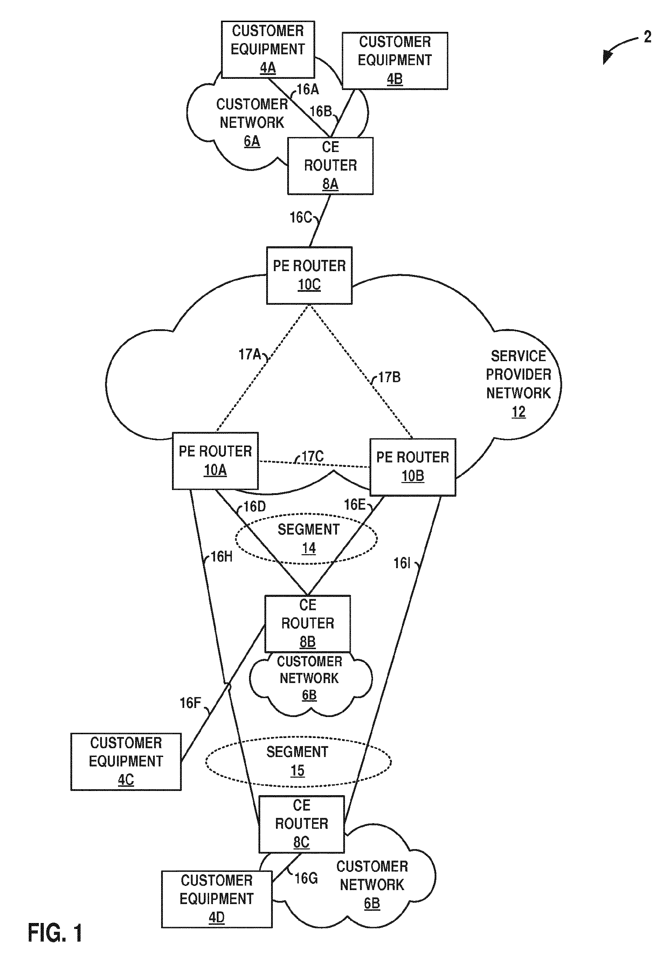

FIG. 1 is a block diagram illustrating an example system 2, in accordance with techniques of the disclosure. In the example of FIG. 1, PE routers 10A-10C ("PE routers 10" or "PE network devices 10") provide customer devices 4A-4D ("customer devices 4" or "customer equipment 4") associated with customer networks 6A-6C ("customer networks 6") with access to service provider network 12 via CE routers 8A-8C ("CE routers 8" or "CE network devices 8"). Network links 16A-16I may be Ethernet, ATM or any other suitable network connections.

PE routers 8 and CE routers 10 are illustrated as routers in the example of FIG. 1. However, techniques of the disclosure may be implemented using switches or other suitable network devices that participate in a layer two (L2) virtual private network service, such as an Ethernet Virtual Private Network (EVPN). Customer networks 6 may be networks for geographically separated sites of an enterprise. Each of customer networks 6 may include additional customer equipment 4A-4D ("customer equipment 4"), such as, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. The configuration of network 2 illustrated in FIG. 1 is merely provided as an example. For example, an enterprise may include any number of customer networks 6. Nonetheless, for ease of description, only customer networks 6A-6B are illustrated in FIG. 1.

Service provider network 12 represents a publicly accessible computer network that is owned and operated by a service provider, which is usually large telecommunications entity or corporation. Service provider network 12 is usually a large layer three (L3) computer network, where reference to a layer followed by a number refers to a corresponding layer in the Open Systems Interconnection (OSI) model. Service provider network 12 is a L3 network in the sense that it natively supports L3 operations as described in the OSI model. Common L3 operations include those performed in accordance with L3 protocols, such as the Internet protocol (IP). L3 is also known as a "network layer" in the OSI model and the term L3 may be used interchangeably with the phrase "network layer" throughout this disclosure.

Although not illustrated, service provider network 12 may be coupled to one or more networks administered by other providers, and may thus form part of a large-scale public network infrastructure, e.g., the Internet. Consequently, customer networks 6 may be viewed as edge networks of the Internet. Service provider network 12 may provide computing devices within customer networks 6 with access to the Internet, and may allow the computing devices within the customer networks to communicate with each other. Service provider network 12 may include a variety of network devices other than PE routers 10. Although additional network devices are not shown for ease of explanation, it should be understood that system 2 may comprise additional network and/or computing devices such as, for example, one or more additional switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Moreover, although the elements of system 2 are illustrated as being directly coupled, it should be understood that one or more additional network elements may be included along any of network links 16, such that the network elements of system 2 are not directly coupled.

Service provider network 12 typically provides a number of residential and business services, including residential and business class data services (which are often referred to as "Internet services" in that these data services permit access to the collection of publically accessible networks referred to as the Internet), residential and business class telephone and/or voice services, and residential and business class television services. One such business class data service offered by service provider network 12 includes L2 EVPN service. For example, an EVPN is a service that provides a form of L2 connectivity across an intermediate L3 network, such as service provider network 12, to interconnect two L2 customer networks, such as L2 customer networks 6, that are usually located in two different geographic areas. Often, EVPN is transparent to the customer networks in that these customer networks are not aware of the intervening intermediate service provider network and instead act and operate as if these two customer networks were directly connected and formed a single L2 network. In a way, EVPN enables a form of a transparent LAN connection between two geographically distant customer sites that each operates a L2 network and, for this reason, EVPN may also be referred to as a "transparent LAN service."

To configure an EVPN, a network operator of the service provider configures various devices included within service provider network 12 that interface with L2 customer networks 6. The EVPN configuration may include an EVPN instance (EVI), which consists of one or more broadcast domains. Generally, an EVI may refer to a routing and forwarding instance on a PE router, such as PE routers 10A-10C. Consequently, EVIs may be configured on PE routers 10 for Ethernet segments 14 and 15, respectively, as further described herein, each providing a separate, logical layer two (L2) forwarding domain. In this way, separate EVIs may be configured, respectively, for Ethernet segments 14 and 15 that each includes one or more of PE routers 10A-10C. In some examples, Ethernet Tags are then used to identify a particular broadcast domain, e.g., a VLAN, in an EVI. A PE router may advertise a unique EVPN label per <ESI, Ethernet Tag> combination. This label assignment methodology is referred to as a per <ESI, Ethernet Tag> label assignment. Alternatively, a PE router may advertise a unique EVPN label per MAC address. In still another example, a PE router may advertise the same single EVPN label for all MAC addresses in a given EVI. This label assignment methodology is referred to as a per EVI label assignment.

In the example of FIG. 1, for use in transporting communications associated with one or more EVIs, the network operator configures PE routers 10 to provision pseudowires 17A-17C for transporting L2 communications. Pseudowires are logical network connections formed from two unidirectional label switched paths (LSPs) that emulate a connection not natively offered by service provider network 12 for consumption outside the boundaries of that service provider network 12. Pseudowires may emulate a L2 connection within service provider network 12 enabling service provider network 12 to offer emulated L2 connectivity externally for consumption by L2 customer networks 6. As such, each EVPN instance may operate over pseudowires 17 to enable a logical form of L2 connectivity between customer networks 6.

To configure an EVI, pseudowires 17 may be configured such that each of PE routers 10 that provide a given EVI is interconnected by way of pseudowires to every other one of the PE devices participating in the EVI. In the example of FIG. 1, each of PE routers 10 provides access to the EVPN for carrying traffic associated with customer networks 6 and, therefore, each of PE devices 10 within the same Ethernet segment may be connected to every other PE device 10 via pseudowires 17. Once pseudowires are configured in this manner, EVPN may be enabled within PE devices 10 to operate over the pseudowires, which may in this context operate as logical dedicated links through service provider network 12. In operation, EVPN generally involves prepending or otherwise inserting a tag and a pseudowire label onto incoming L2 packets, which may also be referred to as L2 frames (particularly in the context of Ethernet), and transmitting the tagged packets through a corresponding one of the configured pseudowires. Once EVPN is configured within service provider network 12, customer devices 4 within customer networks 6 may communicate with one another via EVPN as if they were directly connected L2 networks.

In order to establish the EVPN, an EVPN protocol executing on PE routers 10A-10C triggers EVPN designated forwarder (DF) election for Ethernet segment 14. This may be accomplished, for example, by EVPN protocol executing on each of PE routers 10A-10C that participating in the Ethernet segment directing the router to output a routing protocol message advertising an Ethernet Segment Identifier (ESI), which is typically unique across all EVPN instances (EVIs). In addition, for each EVI, the EVPN protocol directs the router to output a routing protocol message advertising an Ethernet Auto-Discovery (AD) route specifying the relevant ESI for the Ethernet segment coupled to the EVPN instance. Once the EVPN is operational for the {EVI, ESI}pair, PE routers 10A-10B output routing protocol messages to remote PE router 10C to announce media access control (MAC) addresses associated with customer equipment in customer networks 6B and 6C.

For example, in typical operation, PE routers 10A-10C communicate using the Border Gateway Protocol (BGP) and the EVPN protocol specifies BGP Network Layer Reachability Information (NLRI) for the EVPN and may define different route types for conveying EVPN information via the BGP routing protocol. The EVPN NLRI is typically carried in BGP using BGP Multiprotocol Extensions. An Ethernet Segment route advertised by each PE router 10A-10B using BGP includes a Route Distinguisher and Ethernet Segment Identifier. An Ethernet AD route advertised by each PE router 10A-10B for each EVI, specifies a Route Distinguisher (RD) (e.g., an IP address of an MPLS Edge Switch (MES)), ESI, Ethernet Tag Identifier, and MPLS label. Subsequent BGP media access control (MAC) routes output by PE router 10A-10B announce MAC addresses of customer equipment 4 for the EVPN include a RD, ESI, Ethernet Tag Identifier, MAC address and MAC address length, IP address and IP address length, and MPLS label.

As such, the EVPN protocol executing on each PE router 10A-10B initiates EVPN DF election for the Ethernet segment on a per EVPN instance basis, and participates within that election for each EVPN instance. That is, DF election may be at the granularity of each ESI, EVI combination. If elected DF, one of PE routers 10A-10B elected as DF forwards traffic from the EVPN to local CE routers 8B and 8C. Additional example information with respect to the EVPN protocol is described in "BGP MPLS Based Ethernet VPN," draft-ietf-12vpn-evpn-11, Internet Engineering Task Force (IETF), February 2015, the entire contents of which are incorporated herein by reference.

In the example of FIG. 1, when providing the EVPN service to customer networks 6, PE routers 10 and CE routers 8 typically perform MAC address learning to efficiently forward L2 network communications in system 2. That is, as PE routers 10 and CE routers 8 forward Ethernet frames, the routers learn L2 state information for the L2 network, including MAC addressing information for customer equipment 4 within the network and the physical ports through which customer equipment 4 are reachable. PE routers 10 and CE routers 8 typically store the MAC addressing information in MAC tables associated with respective interfaces. When forwarding an individual Ethernet frame received on one interface, a router typically broadcasts the Ethernet frame to all other interfaces associated with the EVPN unless the router has previously learned the specific interface through which the destination MAC address specified in the Ethernet frame is reachable. In this case, the router forwards a single copy of the Ethernet frame out the associated interface.

Moreover, as PE routers 10 learn the MAC address for customer equipment 4 reachable through local attachment circuits, the PE routers 10 utilize MAC address route advertisements of a layer three (L3) routing protocol (i.e., BGP in this example) to share the learned MAC addresses and to provide an indication that the MAC addresses are reachable through the particular PE router that is issuing the route advertisement. In the EVPN implemented using PE routers 10 for a given EVI, each of PE routers 10 advertises the locally learned MAC addresses to other PE routers 10 using a BGP route advertisement, also referred to herein as a "MAC route" or a "MAC Advertisement route." As further described below, a MAC route typically specifies an individual MAC address of customer equipment 4 along with additional forwarding information, such as a route descriptor, route target, layer 2 segment identifier, MPLS label, etc. In this way, PE routers 10 use BGP to advertise and share the MAC addresses learned when forwarding layer two communications associated with the EVPN.

In this way, PE routers 10 may perform both local learning and remote learning of MAC addresses. Each of PE routers 10 (e.g., PE router 10D) utilizes MAC routes specifying the MAC addresses learned by other PE routers to determine how to forward L2 communications to MAC addresses that belong customer equipment 4 connected to other PEs, i.e., to remote CE routers and/or customer equipment behind CE routers operatively coupled to PE routers. That is, each of PE routers 10 determine whether Ethernet frames can be sent directly to a particular one of the other PE routers 10 or whether to treat the Ethernet frames as so called "BUM" traffic (Broadcast, Unidentified Unicast or Multicast traffic) that is to be flooded within the EVPN based on the MAC addresses learning information received from the other PE routers.

As shown in FIG. 1, CE routers 8 may be multi- and/or singly-homed to one or more of PE routers 10. In EVPN, a CE router may be said to be multi-homed when it is coupled to two physically different PE routers on the same EVI when the PE routers are resident on the same physical Ethernet Segment. As one example, CE router 8B is coupled to PE routers 10A, 10B via links 16D and 16E 16F, respectively, where PE routers 10A and 10B are capable of providing access to EVPN for L2 customer network 6B via CE router 8B. CE router 6C is similarly configured, such that CE router 6C is coupled to PE routers 10A and 10B using links 16H and 16I. In instances where a given customer network (such as customer network 6B) may couple to service provider network 12 via two different and, to a certain extent, redundant links, the customer network may be referred to as being "multi-homed." In this example, CE router 8B may be multi-homed to PE routers 10A and 10B because CE router 8B is coupled to two different PE routers 10A and 10B via separate and, to a certain extent, redundant links 16D and 16E, where both of PE routers 10A and 10B are capable of providing access to EVPN for L2 customer network 6B. Multi-homed networks are often employed by network operators so as to improve access to EVPN provided by service provider network 12 should a failure in one of links 16D and 16E occur.

In FIG. 1, PE routers 10A and 10B are each configured as part of two different Ethernet segments 14 and 15. Each of Ethernet segments 14 and 15 has a different ESI. For instance, Ethernet segment 14 may have an ESI value of 100, while Ethernet segment 15 may have an ESI value of 200. In the example of FIG.1, network traffic sent from CE network 6A and destined for CE network 6B or 6C may be distributed by PE router 10C to each of PE routers 10A and 10B. PE routers 10A and 10B, upon receiving the network traffic may forward it to the respective CE network.

PE routers 10A-10C may exchange unicast labels that correspond to different CE routers for different Ethernet segments. For instance, PE router 10A may advertise, to PE routers 10B and 10C, first and second unicast labels that correspond respectively to CE router 8B of Ethernet segment 14 and CE router 8C of Ethernet segment 15. Accordingly, if PE router 10A applies the first unicast label from PE router 10A that corresponds to CE router 8B to a packet and forwards the packet to PE router 10A, then PE router 10A may process the unicast label and forward the packet to CE router 8B without also forwarding the packet to CE router 8C. In this way, if PE router 10C learns a MAC route to customer equipment 4C, PE router 10C may apply the first unicast label corresponding to CE router 8B to packets from customer network 6A, such that the packets are forwarded by PE router 10A to customer network 6B, and finally customer equipment 4C.

PE routers 10 may apply unicast labels to unicast traffic that is destined for a single host or customer device. By contrast, BUM traffic is flooded within an EVPN. To prevent duplication flooding of BUM traffic by multiple PE routers within the same Ethernet segment, only one PE router within an Ethernet segment is designated as the primary DF for the Ethernet segment while other PE routers may be configured as backup DFs. The primary DF within the Ethernet segment is responsible for flooding any BUM traffic within the Ethernet segment, while any other PE router within the same Ethernet segment will not flood the EVPN with the BUM traffic. In the example of FIG. 1, PE router 10B may be the primary DF for each of Ethernet segments 14 and 15, while PE router 10A may be the backup DF for each of Ethernet segments 14 and 15. As such, any BUM traffic received by PE router 10B for Ethernet segments 14 and 15 will be flooded by PE router 10B to CE routers 8B and 8C. Any BUM traffic received by PE router 10A for Ethernet segments 14 and 15 will be dropped by PE router 10B because PE router 10B is a backup DF and not a primary DF for Ethernet segments 14 and 15.

In some instances, PE routers 10 may advertise multicast or "IM" labels to each other PE router. An IM label (or "multicast label"), when processed by a particular PE router that advertised the IM label, causes the particular PE router to forward the packet to all CE routers directly coupled to the particular PE router. For instance, PE router 10A may advertise, to PE routers 10B and 10C, an IM label for PE router 10A. PE router 10A, upon receiving packets with the IM label from PE routers 10B and 10C, forwards the packets to each of CE routers 8B and 8C that are directly coupled to PE router 10A by links 16D and 16H. That is, in some examples, an IM label advertised by a particular PE router, causes that particular PE router, when processing network packets with the IM label, to forward the packets to each of the CE routers that are included in an Ethernet segment and directly coupled to the particular PE router.

In some examples, link failures may occur at one or more of links 16D, 16E, 16H, or 16I, which multihome CE routers 8B and 8C to PE routers 10A and 10B. For instance, in the event of a link failure at link 16E, PE router 10B may perform "global repair" by sending an AD route withdrawal message to PE router 10C, which causes PE router 10C to withdraw PE router 10B for routes within Ethernet segment 14. For instance PE router 10C may remove the link or adjacency between CE router 8B and PE router 8B from Ethernet segment 14 routes. However, the AD route withdrawal message is transported by BGP and may take multiple seconds before PE router 10C removes PE router 10B from an adjacent list for Ethernet segment 14 and redirects any traffic for Ethernet segment 14 to PE router 10A.

During the time that link 16E has failed and global repair has not yet completed, packets for Ethernet segment 14 may be dropped at PE router 10B. As previously described above, PE router 10A may have previously advertised, to PE routers 10C and 10B, unicast labels that correspond to CE router 8B and CE router 8C. Similarly, PE router 10B may have previously advertised, to PE routers 10A and 10C, unicast labels that correspond to CE router 8B and CE router 8C. To prevent fewer dropped unicast packets for Ethernet segment 14 if link 16E fails, PE router 10B may perform "local repair" by swapping the unicast label of a packet for CE router 8B that was advertised by PE router 10B with the unicast label for CE router 8B that was advertised by PE router 10A. Upon swapping the unicast label, PE router 10B may forward the unicast packet to PE router 10A, which upon processing the unicast label, forwards the packet to CE router 8B. In this way, local repair allows PE router 10B to redirect unicast packets to PE router 10A within milliseconds, until PE router 10C completes global repair.

In the case of BUM traffic for failure of link 16E, PE router 10B may also perform local repair in the following way to reduce the number of dropped BUM packets at PE router 10B while PE router 10C is performing global repair. PE router 10B may perform "local repair" by swapping the IM label of a packet that was advertised by PE router 10B with the IM label for CE router 8B that was advertised by PE router 10A. Upon swapping the IM label, PE router 10B may forward the packet to PE router 10A, which upon processing the IM label, forwards the packet to both of CE routers 8B and 8C. However, since PE router 10B is the primary DF for Ethernet segment 15, PE router 10B also sends the multicast packet to CE router 8C. Accordingly, and undesirably, duplicate copies of the multicast packet are received by CE router 8C from both of PE routers 10A and 10B as a result of PE router 10B performing local repair. In such examples, PE router 10A becomes the primary DF in the event that link 16E fails.

To prevent duplicate copies of BUM traffic packets from being sent during local repair at PE router 10B due to a link failure, techniques of the disclosure introduce an egress protection label, applied by PE router 10B to the BUM traffic packet, which causes PE router 10A to only send the BUM traffic packet to CE router 8B. In this way, PE router 10B may perform local repair using the egress protection label to reduce drops of multicast traffic, and avoid sending duplicate copies of the multicast packet to a CE router in an Ethernet segment unaffected by the link failure.

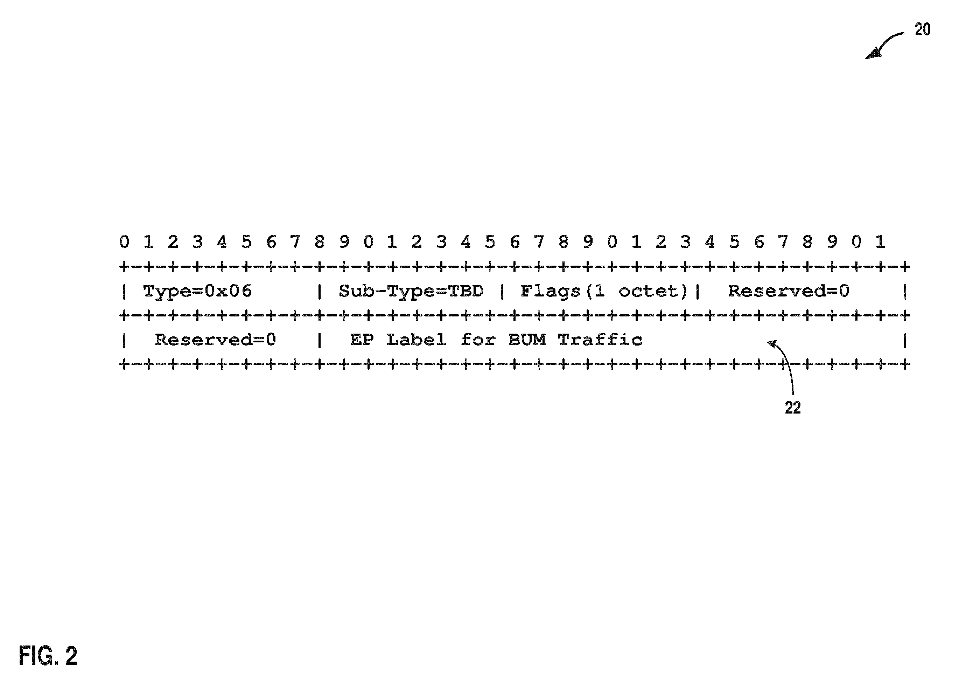

In operation, PE router 10A may, prior to a failure of link 16E, advertise to PE router 10B a first egress protection label for CE router 8B of Ethernet segment 14 and a second egress protection label for CE router 8C of Ethernet segment 15. PE router 10A may advertise the egress protection label in a BGP extended community of an AD route per ESI message. An AD route per ESI message may be a BGP control plane message that is sent by one PE router to another PE router. As further illustrated in FIG. 2, the BGP extended community may include one or more attributes that label information included in a BGP message. In accordance with techniques of this disclosure, an AD route per ESI message may include an identifier of an ESI or be associated with an ESI for which the egress protection label applies and the egress protection label itself. In some examples, the value of the egress protection label itself is set by an administrator, operator, or protocol specification.

PE router 10B, upon receiving an AD route per ESI message from PE router 10A, determines the ESI of the AD route per ESI message and further determines that an egress protection label is included in the BGP extended community. PE router 10B may pre-configure its forwarding state, such that while no link failures have occurred at links 16E or 16I, PE router 10B will forward BUM traffic for Ethernet segment 14 using link 16E and will forward BUM traffic for Ethernet segment 15 using link 16I.

In accordance with techniques of the disclosure, PE router 10B may also pre-configure its forwarding state to, upon detecting a link failure at link 16E, swap the IM label previously advertised by PE router 10B, and that is attached to BUM network packets, with the IM label advertised by PE router 10A. PE router 10B may also attach the egress protection label received from PE router 10A for Ethernet segment 14, and forward the BUM network packet to PE router 10A. In some examples, PE router 10B may also attach a transport label to the BUM network packet that corresponds to PE router 10A. The transport label may identify or otherwise correspond to a Label Switched Path (LSP) from PE router 10B to PE router 10A. By pre-configuring PE router 10B to swap the IM label and attach the egress protection label, PE router 10B may perform local repair in the event of a failure at link 16E by forwarding the BUM network packet to PE router 10A rather than dropping the packet.

If PE router 10B later detects that link 16E has failed, PE router 10B, as the designated forwarder for Ethernet segment 15, may still forward BUM network packets to CE router 8C. PE router 10B, in accordance with techniques of the disclosure, swaps the IM label previously advertised by PE router 10B and that is attached to the BUM network packets, with the IM label advertised by PE router 10A. In addition, PE router 10B attaches the egress protection label, which PE router 10A previously advertised for Ethernet segment 14, to the BUM network packet. PE router 10B selects the egress protection label for Ethernet segment 14 based on determining that the failed link 16E is included in the same Ethernet segment 14. PE router 10B also attaches a transport label to the BUM network packets that corresponds to PE router 10A. Accordingly, the label stack for the BUM network packets includes (1) the transport label advertised by PE router 10A (2) the IM label advertised by PE router 10A (3) the egress protection label advertised by PE router 10A for Ethernet segment 14 that includes CE router 8B. In some examples, attaching the transport label may include appending, inserting or prepending labels of the label stack to BUM network packets.

PE router 10A may receive the BUM network packets and process the packets according to the attached label stacks. For instance, PE router 10A may pop or otherwise remove the transport label upon receiving a BUM network packet. PE router 10A may determine that the IM label is attached to the BUM network packet. Rather than forwarding the BUM network packet to each of CE routers 8B and 8C, PE router 10A only forwards the BUM network packet to CE router 8B in Ethernet segment 14 because PE router 10A determines that the egress protection label for Ethernet segment 14 is also included in the label stack. That is, the egress protection label for Ethernet segment 14 causes PE router 10A to only forward to the BUM network packet to CE routers included in Ethernet segment 14. As such, the BUM network packet is not also sent to CE router 8C in Ethernet segment 15, which receives the BUM network packet from PE router 10B. In other words, PE router 10A, based on the egress protection label, may send the BUM network packet only to CE routers, such as CE router 8B, that is included in Ethernet segment 14 and will not send the BUM network packet to any other interface in the broadcast domain (e.g., CE router 8C). In this way, the egress protection label prevents duplicate BUM network packets from being sent by PE router 10A to CE router 8C when PE router 10B, as the designated forwarder for Ethernet segment 15, sends the BUM network packets to CE router 8C using link 16I. Therefore, techniques of the disclosure may provide for fast local repair at PE router 10B for BUM traffic in the event that a network link fails in Ethernet segment 14. In some examples, techniques of the disclosure may, in the event of link failure, restore BUM network traffic within 50 milliseconds. In some examples, techniques of the disclosure may, in the event of link failure, restore BUM network traffic within 100 milliseconds.

FIG. 2 illustrates an example format of a BGP extended community data structure 20 to be embedded within an AD route per ESI message advertised by each multi-homed PE router of an Ethernet segment, in accordance with techniques of the disclosure. As shown in FIG. 2, BGP extended community 20 includes 64 bits. For example purposes, the egress protection label 22 is included in the 24 highest ordered bits for the 64-bit BGP extended community 20. In accordance with the techniques described herein, multi-homing each of PEs 10A-10B, for example, advertise the AD route per ESI message with BGP extended community 20 to each other. In some examples, each of PE routers 10A-10B include data that indicates a defined value for egress protection label 20, such that PE routers 10A-10B can identify an AD route per ESI message as including and egress protection label.

As described in FIG. 1, PE router 10B, in response to receiving an AD route per ESI message for Ethernet segment 14 from PE router 10A that includes extended community 20, may pre-configure the forwarding state of PE router 10B to, upon detecting a link failure at link 16E, swap for the packet, the IM label previously advertised by PE router 10B with the IM label advertised by PE router 10A. PE router 10B may also attach an egress protection label received from PE router 10A for Ethernet segment 14, and forward the BUM network packet to PE router 10A. In some examples, PE router 10B may also attach a transport label to the BUM network packet that corresponds to PE router 10A. By pre-configuring PE router 10B to swap the IM label and attach the egress protection label, PE router 10B may perform local repair in the event of a failure at link 16E by forwarding the BUM network packet PE router 10A rather than dropping the packet

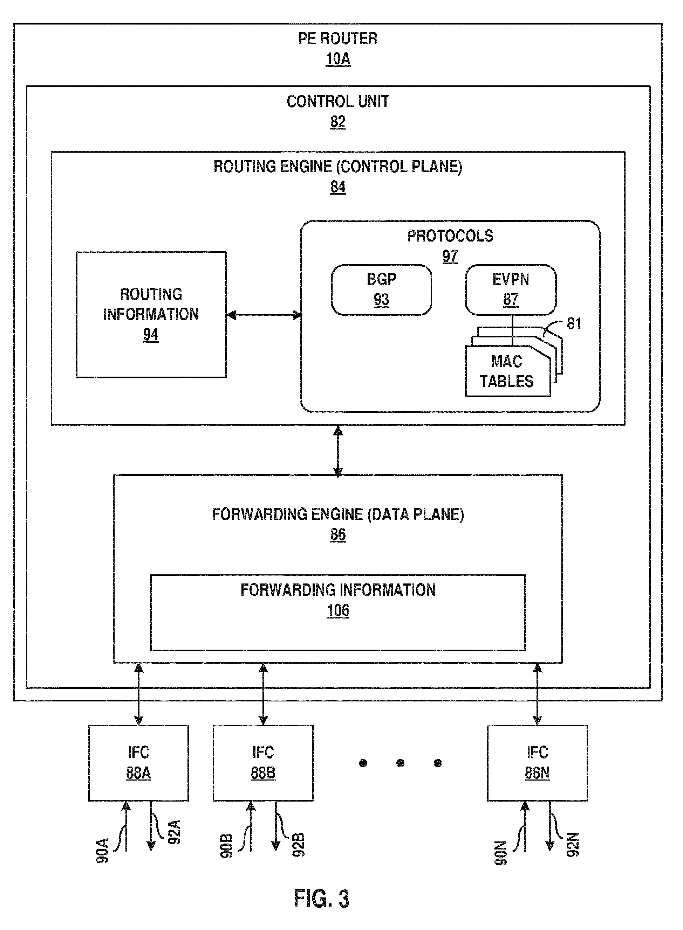

FIG. 3 is a block diagram illustrating further details of an example PE router 10A, in accordance with techniques of the disclosure. In general, PE router 10A may operate substantially similar to PEs 10 of FIG. 1. In this example, PE router 10A includes interface cards 88A-88N ("IFCs 88") that receive packets via incoming links 90A-90N ("incoming links 90") and send packets via outbound links 92A-92N ("outbound links 92"). IFCs 88 are typically coupled to links 90, 92 via a number of interface ports. PE router 10A also includes a control unit 82 that determines routes of received packets and forwards the packets accordingly via IFCs 88.

Control unit 82 may comprise a routing engine 84 and a packet forwarding engine 86 (or "forwarding unit"). Routing engine 84 operates as the control plane for PE router 10A and includes an operating system that provides a multi-tasking operating environment for execution of a number of concurrent processes. Routing engine 84, for example, execute software instructions to implement one or more control plane networking protocols 97. For example, protocols 97 may include one or more routing protocols, such as Border Gateway Protocol (BGP) 99, for exchanging routing information with other routing devices and for updating routing information 94. Routing information 94 may describe a topology of the computer network in which PE router 10A resides, and may also include routes through the shared trees in the computer network. Routing information 94 describes various routes within the computer network, and the appropriate next hops for each route, i.e., the neighboring routing devices along each of the routes. Routing engine 84 analyzes stored routing information 94 and generates forwarding information 106 for forwarding engine 86. Forwarding information 106 may associate, for example, network destinations for certain multicast groups with specific next hops and corresponding IFCs 88 and physical output ports for output links 92. Forwarding information 106 may be a radix tree programmed into dedicated forwarding chips, a series of tables, a complex database, a link list, a radix tree, a database, a flat file, or various other data structures.

In addition, routing engine 84 executes EVPN protocol 87, which operates to communicate with other routers to establish and maintain an EVPN, such as the EVPN of FIG. 1, for transporting L2 communications through an intermediate network so as to logically extend an Ethernet network through the intermediate network. EVPN protocol 87 may, for example, communicate with EVPN protocols executing on remote routers to establish pseudowires for the EVPN and maintain MAC address tables 50 associating L2 customer MAC addresses with specific pseudowires. When implementing an EVPN, L2 MAC learning may be performed in the control plane by exchanging, with remote PE devices, BGP messages containing customer MAC addresses. EVPN protocol 87 communicates information recorded in MAC tables 81 to forwarding engine 86 so as to configure forwarding information 56. In this way, forwarding engine 30A may be programmed with associations between each PW and output interface and specific source customer MAC addresses reachable via those PWs. Additional example information with respect to the EVPN protocol is described in "BGP MPLS Based Ethernet VPN," draft-ietf-12vpn-evpn-11, Internet Engineering Task Force (IETF), February 2015, the entire contents of which are incorporated herein by reference.

In example embodiments, BGP 93 and EVPN 87 operate in accordance with the techniques described herein so as to advertise and/or receive AD route per ESI messages that have been enhanced to carry an extended community data structure that includes an egress protection label as described herein. That is, responsive to instructions from EVPN protocol 87, BGP protocol 93 generates for output AD route per ESI messages that include egress protection labels and corresponding ESIs. Moreover, BGP 93 may similarly be configured to receive AD route per ESI messages routes specifying such information, and may extract such information and convey the elections to EVPN 87.

In accordance with techniques of the disclosure, routing engine 84 may receive AD route per ESI messages from PE router 10B. A first AD route per ESI message may include an ESI for Ethernet segment 14 and a second AD router per ESI message may include an ESI for Ethernet segment 14. Each of the first and second AD route per ESI messages may include an egress protection label in the BGP extended communicate that is included in the respective AD route per ESI messages.

Routing engine 84 may configure forwarding information 106 to include one or more primary and backup next hops based on the AD route per ESI messages from PE router 10B. For instance, routing engine 84 may configure a primary next hop for Ethernet segment 14 in forwarding information 106. The primary next hop for Ethernet segment 14 causes forwarding engine 86 to forward BUM network packets to CE router 8B while link 16E has not failed. In accordance with techniques of the disclosure, routing engine 84 may also configure a backup next hop for Ethernet segment 14 in forwarding information 106. The backup next hop for Ethernet segment 14 is applied in response to a failure of link 16E. The backup next hop causes forwarding engine 86 to, upon receiving a BUM network packet, remove the IM label attached to the BUM network packet and attach the IM label received by PE router 10A to the BUM network packet. The backup next hop also causes forwarding engine 86 to apply the egress protection label for Ethernet segment 14 that was received from PE router 10A. In some examples, the backup next hop also causes forwarding engine 86 to apply a transport label that corresponds to PE router 10A to the BUM network packet. The backup next hop also causes forwarding engine 86 to forward the BUM network packet out of one of interfaces 88 that is coupled to PE router 10A, such that PE router 10A receives the BUM network packet.

Routing engine 84 may include each of the primary and backup next hops in a next hop list. The next hop list may have an active element and one or more inactive elements. Accordingly, routing engine 84 may initially configure forwarding information 106 such that the active element is the primary next hop and the backup next hop is an inactive element. As such, when a BUM network packet for Ethernet segment 14 is received by PE router 10A, forwarding engine 86 performs a lockup based on header information of the BUM network packet, which resolves to the primary next hop. Forwarding engine 86 performs one or more operations associated with the primary next hop that cause the BUM network packet to be forwarded out one of interfaces 88 that is coupled to CE router 8B. Routing engine 84 may similarly configure primary and backup next hops for Ethernet segment 15 as described with respect to Ethernet segment 14.

At a later time, PE router 10A may detect a failure of link 10E. In response detecting the failure of link 10E, forwarding engine 86 updates the next hop list for Ethernet segment 14, such that the active element is the backup next hop and the inactive element is the primary next hop. As such, when a BUM network packet for Ethernet segment 14 is received by PE router 10B, forwarding engine 86 performs a lookup based on header information of the BUM network packet, which resolves to the backup next hop. Forwarding engine 86 performs one or more operations associated with the backup next hop that: (1) remove the IM label currently included on BUM network packet (2) apply a label stack that includes the IM label advertised by PE router 10A, the egress protection label for Ethernet segment 14 advertised by PE router 10A and a transport label that corresponds to PE router 10A, and (3) forward the BUM network packet out one of interfaces 88 that is coupled PE router 10A, such that PE router 10A receives the BUM network packet with the label stack.

In the event of a failure at link 16E, PE router 10B will still forward the BUM network packet to CE router 8C using link 16I because PE router 10A is the designated forwarder for Ethernet segment 15. However, PE router 10A will not forward the BUM network packet to CE router 8B because link 16E has failed. Instead, as described above, the BUM network packet is forwarded to PE router 10A. PE router 10A processes the BUM network packet in accordance with the attached label stack. In particular, PE router 10A may determine that an IM label advertised by PE router 10A is included in the label stack. Rather than forwarding the BUM network packet to each of CE routers 8B and 8C, PE router 10A determines that an egress protection label for Ethernet segment 14, which was advertised by PE router 10A, is included in the label stack. Accordingly, PE router 10A only forwards the BUM network packet to CE router 8B. As such, the BUM network packet is not sent twice to CE router 8C.

The architecture of PE router 10A illustrated in FIG. 3 is shown for illustrative purposes only. The invention is not limited to this architecture. In other examples, PE router 10A may be configured in a variety of ways. In one example, some of the functionally of control unit 82 may be distributed within IFCs 88. In another example, control unit 82 may comprise a plurality of packet forwarding engines operated as slave routers.

Control unit 82 may be implemented solely in software, or hardware, or may be implemented as a combination of software, hardware, or firmware. For example, control unit 82 may include one or more processors which execute software instructions. In that case, the various software modules of control unit 82 may comprise executable instructions stored on a computer-readable medium, such as computer memory or hard disk.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

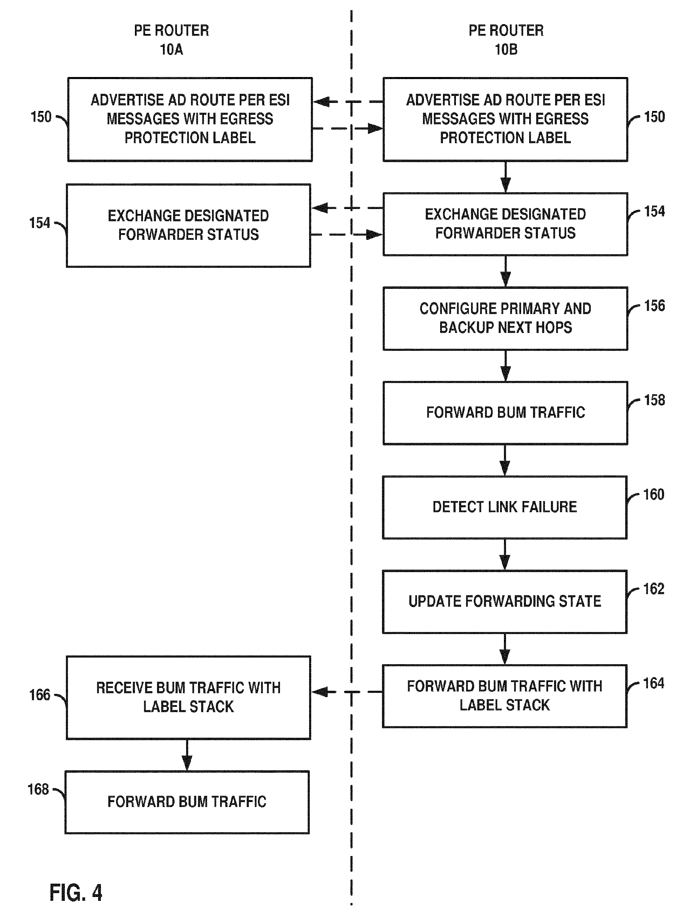

FIG. 4 is a flowchart illustrating example operations of multiple network devices in accordance with techniques of the disclosure. Example operations in accordance with techniques of the disclosure are illustrated for example purposes with respect to PE routers 10A-10B. For simplicity, operation of other routers of the Ethernet segment is not shown in FIG. 4, although such operation may be similar to PE routers 10A, 10B.

As shown in FIG. 4, PE routers 10A and 10B may, at initial configuration and startup, advertise AD router per ESI messages with egress protection labels for each Ethernet segment that includes each PE router (150). In some examples, PE routers 10A and 10B may also exchange respective IM labels for each of PE routers 10A and 10B. PE routers 10A and 10B may also exchange unicast labels and/or transport labels as described in this disclosure. As described in this disclosure, PE routers 10A and 10B may exchange designated forwarder statuses as well based on a designated forwarded election process that is run by each of PE routers 10A and 10B (154). As in the example of FIG. 1, PE router 10B may be the primary designated forwarder for each of Ethernet segments 14 and 14, while PE router 10A may be the backup designated forwarder. By exchanging DF statuses, each of PE routers 10A and 10B configures its respective forwarding plane to either forward BUM traffic for the respective Ethernet segment (e.g., PE router 10B) or not forward BUM traffic for the respective Ethernet segment (e.g., PE router 10A).

PE router 10B may configure its forwarding information to include one or more primary and backup next hops based on the AD route per ESI messages from PE router 10B (156). For instance, PE router 10B may configure a primary next hop for Ethernet segment 14. As described in FIG. 3, the primary next hop for Ethernet segment 14 causes PE router 10B to forward BUM network packets to CE router 8B while link 16E has not failed. In accordance with techniques of the disclosure, PE router 10B may also configure a backup next hop for Ethernet segment 14. The backup next hop for Ethernet segment 14 is applied in response to a failure of link 16E. The backup next hop causes PE router 10B to, upon receiving a BUM network packet, remove the IM label attached to the BUM network packet and attach the IM label received by PE router 10A to the BUM network packet. The backup next hop also causes PE router 10B to apply the egress protection label for Ethernet segment 14 that was received from PE router 10A. In some examples, the backup next hop also causes PE router 10B to apply a transport label that corresponds to PE router 10A to the BUM network packet. The backup next hop also causes PE router 10B to forward the BUM network packet out of one of PE router 10B's interfaces that is coupled to PE router 10A, such that PE router 10A receives the BUM network packet.

As described in FIG. 3, PE router 10B may include each of the primary and backup next hops in a next hop list. The next hop list may have an active element and one or more inactive elements. Accordingly, PE router 10B may initially configure its forwarding information such that the active element is the primary next hop and the backup next hop is an inactive element. As such, when a BUM network packet for Ethernet segment 14 is received by PE router 10A, PE router 10B performs a lookup based on header information of the BUM network packet, which resolves to the primary next hop. PE router 10B performs one or more operations associated with the primary next hop that cause the BUM network packet to be forwarded out one of PE router 10B's interfaces that is coupled to CE router 8B (158). PE router 10B may similarly configure primary and backup next hops for Ethernet segment 15 as described with respect to Ethernet segment 14. Further example details of installation of primary and backup (or secondary) next hops within a forwarding engine (or "forwarding unit") of a router are described in U.S. Patent No. 7,990,993 entitled "PLATFORM-INDEPENDENT CONTROL PLANE AND LOWER-LEVEL DERIVATION OF FORWARDING STRUCTURES" and U.S. Patent No. 8,917,729, entitled "FAST REROUTE FOR MULTIPLE LABEL SWITCHED PATHS SHARING A SINGLE INTERFACE," each of which are incorporated herein by reference.

At a later time, PE router 10B may detect a failure of link 16E (160). In some examples, a failure of link 16E prevents PE router 10B from sending or receiving network traffic with CE router 8B. In response to detecting the link failure, PE router 10B may update its forward state (162). For instance, PE router 10A updates the next hop list for Ethernet segment 14, such that the active element is the backup next hop and the inactive element is the primary next hop. As such, when a BUM network packet for Ethernet segment 14 is received by PE router 10B, then PE router 10B performs a lookup based on header information of the BUM network packet, which resolves to the backup next hop. PE router 10B performs one or more operations associated with the backup next hop that: (1) remove the IM label currently included on BUM network packet (2) apply a label stack that includes the IM label advertised by PE router 10A, the egress protection label for Ethernet segment 14 advertised by PE router 10A and a transport label that corresponds to PE router 10A, and (3) forward the BUM network packet out one of interfaces 88 that is coupled PE router 10A (164).

PE router 10A receives the BUM network packet with the label stack (166). PE router 10B will still forward the BUM network packet to CE router 8C using link 16I because PE router 10A is the designated forwarder for Ethernet segment 15. However, PE router 10A will not forward the BUM network packet to CE router 8B because link 16E has failed. Instead, as described above, the BUM network packet is forwarded to PE router 10A. PE router 10A processes the BUM network packet in accordance with the attached label stack. In particular, PE router 10A may determine that an IM label advertised by PE router 10A is included in the label stack. Rather than forwarding the BUM network packet to each of CE routers 8B and 8C, PE router 10A determines that an egress protection label for Ethernet segment 14, which was advertised by PE router 10A, is included in the label stack. Accordingly, PE router 10A only forwards the BUM network packet to CE router 8B. As such, the BUM network packet is not sent twice to CE router 8C (168).

In addition to or as an alterative to the above, the following examples are described. The features described in any of the following examples may be utilized with any of the other examples described herein.

Example 1. A method comprising: receiving, by a first provider edge (PE) network device, an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a Customer Edge (CE) network device is multi-homed to the first and second PE network devices in the Ethernet segment; in response to detecting a link failure of a link that couples the first PE network device and the CE network device, configuring, by the first PE network device, forwarding information of the first PE network device to apply the egress protection label to the BUM network packets received by the first PE network device and forward the BUM network packets to the second PE network device; and in response to receiving the BUM network packets, forwarding, by the first PE network device, the BUM network packets with the egress protection label to the second PE network device, such that the egress protection label causes the second PE network device to forward the BUM network packets to the CE network device in the Ethernet segment.

Example 2. The method of example 1, further comprising: attaching, by the first PE network device, and to a BUM network packet of the BUM network packets, a label stack comprising: the egress protection label for the Ethernet segment; a multicast label, wherein the multicast label instructs the second PE network device to forward the BUM network packet to each of a plurality of CE network devices that are included in the Ethernet segment and directly coupled to the second PE network device; and a transport label that identifies a label-switch path between the first PE network device and the second PE network device, wherein the transport label was previously advertised by the second PE network device to the first PE network device.

Example 3. The method of example 1, further comprising: prior to detecting the link failure of the link that couples the first PE network device and the CE network device: sending, by the first PE network device and to the second PE network device, respective egress protection labels of the first PE network device for each Ethernet segment that includes the first PE network device; and receiving, by the first PE network device and from the second PE network device, respective egress protection labels of the second PE network device for each Ethernet segment that includes the second PE network device.

Example 4. The method of example 3, the method further comprising: storing, by the first PE network device, the egress protection label in a Border Gateway Protocol (BGP) extended community of an Auto-Discovery (AD) route per Ethernet Segment Identifier (ESI) message; sending, by the first PE network device and to the second PE network device, the AD route per ESI message.

Example 5. The method of example 1, further comprising: configuring, by the first PE network device and in a forwarding unit of the first PE network device, a primary next hop for the Ethernet segment and a backup next hop for the Ethernet segment, wherein the primary next hop is configured to forward the BUM network packets to the CE network device prior to the link failure, wherein the backup next hop is configured to apply the egress protection label to the BUM network packets in response to detecting the link failure; forwarding, by the first PE network device and prior to the link failure, the BUM network packets to CE network device using the primary next hop; and in response to detecting the link failure of the link that couples the first PE network device and the CE network device, forwarding, by the first PE network device, the BUM network packets to the second PE network device using the backup next hop.

Example 6. The method of example 1, wherein the CE network device is a first CE network device, wherein the Ethernet segment is a first Ethernet segment, wherein the first PE network device and the second PE network device are each coupled to a second CE network device in a second Ethernet segment, and forwarding, by the first PE network device after the link failure, the BUM network packets to the second CE network device, and wherein the second PE network device does not forward the BUM network packets to the second CE network device in the second Ethernet segment.

Example 7. The method of example 1, further comprising: in response to detecting the link failure of the link that couples the first PE network device and the CE network device, sending by the first PE network device, an Auto-Discovery route withdrawal message to the second PE network device.

Example 8. A device, wherein the device is a first provider edge (PE) network device, the device comprising: a routing engine that receives an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment; wherein the routing engine, in response to detecting a link failure of a link that couples the first PE network device and the CE network device, configures forwarding information of the first PE network device to apply the egress protection label to the BUM network packets received by the first PE network device and forward the BUM network packets to the second PE network device; and a forwarding unit that, in response to receiving the BUM network packets, forwards the BUM network packets with the egress protection label to the second PE network device, such that the egress protection label causes the second PE network device to forward the BUM network packets to the CE network device in the Ethernet segment.

Example 9. The device of example 8, wherein the forwarding unit attaches to a BUM network packet of the BUM network packets, a label stack comprising: the egress protection label for the Ethernet segment; a multicast label, wherein the multicast label instructs the second PE network device to forward the BUM network packet to each of a plurality of CE network devices that are included in the Ethernet segment and directly coupled to the second PE network device; and a transport label that identifies a label-switch path between the first PE network device and the second PE network device, wherein the transport label was previously advertised by the second PE network device to the first PE network device.

Example 10. The device of example 8, wherein prior to detecting the link failure of the link that couples the first PE network device and the CE network device, the forwarding unit: sends, to the second PE network device, respective egress protection labels of the first PE network device for each Ethernet segment that includes the first PE network device; and receives, from the second PE network device, respective egress protection labels of the second PE network device for each Ethernet segment that includes the second PE network device.

Example 11. The device of example 10, wherein the forwarding unit: stores the egress protection label in a Border Gateway Protocol (BGP) extended community of an Auto-Discovery (AD) route per Ethernet Segment Identifier (ESI) message; sends, to the second PE network device, the AD route per ESI message.

Example 12. The device of example 8, wherein the routing engine configures, in the forwarding unit of the first PE network device, a primary next hop for the Ethernet segment and a backup next hop for the Ethernet segment, wherein the primary next hop is configured to forward the BUM network packets to the CE network device prior to the link failure, wherein the backup next hop is configured to apply the egress protection label to the BUM network packets in response to detecting the link failure; wherein the forwarding unit forwards, prior to the link failure, the BUM network packets to CE network device using the primary next hop; and in response to detecting the link failure of the link that couples the first PE network device and the CE network device, the forwarding unit forwards the BUM network packets to the second PE network device using the backup next hop.

Example 13. The device of example 8, wherein the CE network device is a first CE network device, wherein the Ethernet segment is a first Ethernet segment, wherein the first PE network device and the second PE network device are each coupled to a second CE network device in a second Ethernet segment, and forwarding, by the first PE network device after the link failure, the BUM network packets to the second CE network device, and wherein the second PE network device does not forward the BUM network packets to the second CE network device in the second Ethernet segment.

Example 14. The device of example 8, wherein in response to detecting the link failure of the link that couples the first PE network device and the CE network device, the forwarding unit sends an Auto-Discovery route withdrawal message to the second PE network device.

Example 15. A computer-readable medium comprising instructions for causing at least one programmable processor of a first PE network device to: receive an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment; in response to detecting a link failure of a link that couples the first PE network device and the CE network device, configure forwarding information of the first PE network device to apply the egress protection label to the BUM network packets received by the first PE network device and forward the BUM network packets to the second PE network device; and in response to receiving the BUM network packets, forward the BUM network packets with the egress protection label to the second PE network device, such that the egress protection label causes the second PE network device to forward the BUM network packets to the CE network device in the Ethernet segment.

Example 16. The computer-readable medium of example 15 comprising instructions for causing at least one programmable processor of the first PE network device to: attach to a BUM network packet of the BUM network packets, a label stack comprising: the egress protection label for the Ethernet segment; a multicast label, wherein the multicast label instructs the second PE network device to forward the BUM network packet to each of a plurality of CE network devices that are included in the Ethernet segment and directly coupled to the second PE network device; and a transport label that identifies a label-switch path between the first PE network device and the second PE network device, wherein the transport label was previously advertised by the second PE network device to the first PE network device.

Example 17. The computer-readable medium of example 15 comprising instructions for causing at least one programmable processor of the first PE network device to prior to detecting the link failure of the link that couples the first PE network device and the CE network device: send, to the second PE network device, respective egress protection labels of the first PE network device for each Ethernet segment that includes the first PE network device; and receive, from the second PE network device, respective egress protection labels of the second PE network device for each Ethernet segment that includes the second PE network device.

Example 18. The computer-readable medium of example 17 comprising instructions for causing at least one programmable processor of the first PE network device to: store the egress protection label in a Border Gateway Protocol (BGP) extended community of an Auto-Discovery (AD) route per Ethernet Segment Identifier (ESI) message; send, to the second PE network device, the AD route per ESI message.

Example 19. The computer-readable medium of example 15 comprising instructions for causing at least one programmable processor of the first PE network device to: configure, in a forwarding unit of the first PE network device, a primary next hop for the Ethernet segment and a backup next hop for the Ethernet segment, wherein the primary next hop is configured to forward the BUM network packets to the CE network device prior to the link failure, wherein the backup next hop is configured to apply the egress protection label to the BUM network packets in response to detecting the link failure; forward, prior to the link failure, the BUM network packets to CE network device using the primary next hop; and in response to detecting the link failure of the link that couples the first PE network device and the CE network device, forward the BUM network packets to the second PE network device using the backup next hop.

Example 20. The computer-readable medium of example 15, wherein the CE network device is a first CE network device, wherein the Ethernet segment is a first Ethernet segment, wherein the first PE network device and the second PE network device are each coupled to a second CE network device in a second Ethernet segment, and forwarding, by the first PE network device after the link failure, the BUM network packets to the second CE network device, and wherein the second PE network device does not forward the BUM network packets to the second CE network device in the second Ethernet segment.

Thus, from one perspective, there has now been described, in some examples, a method including: receiving, by a first provider edge (PE) network device, an egress protection label that is advertised by a second PE network device, wherein each of the first and second PE network devices are included in an Ethernet segment, wherein the first PE network device is a designated forwarder for BUM network packets in the Ethernet segment, and wherein a CE network device is multi-homed to the first and second PE network devices; in response to detecting a link failure, configuring forwarding information of the first PE network device to apply the egress protection label to the BUM network packets received by the first PE network device and forward the BUM network packets to the second PE network device; and in response to receiving the BUM network packets, forwarding the BUM network packets with the egress protection label to the second PE network device.

Moreover, any of the specific features set forth in any of the examples described above may be combined into beneficial examples of the described techniques. That is, any of the specific features are generally applicable to all examples of the invention. Various examples of the invention have been described. These and other examples are within the scope of the following claims.

## Claims

1. A method comprising:
receiving, by a first provider edge (PE) network device, an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a Customer Edge (CE) network device is multi-homed to the first and second PE network devices in the Ethernet segment;
in response to detecting a link failure of a link that couples the first PE network device and the CE network device, configuring, by the first PE network device, forwarding information of the first PE network device to apply the egress protection label to the BUM network packets received by the first PE network device and forward the BUM network packets to the second PE network device; and
in response to receiving the BUM network packets, forwarding, by the first PE network device, the BUM network packets with the egress protection label to the second PE network device, such that the egress protection label causes the second PE network device to forward the BUM network packets to the CE network device in the Ethernet segment.

2. The method of claim 1, further comprising:
attaching, by the first PE network device, and to a BUM network packet of the BUM network packets, a label stack comprising:
the egress protection label for the Ethernet segment;
a multicast label, wherein the multicast label instructs the second PE network device to forward the BUM network packet to each of a plurality of CE network devices that are included in the Ethernet segment and directly coupled to the second PE network device; and
a transport label that identifies a label-switch path between the first PE network device and the second PE network device, wherein the transport label was previously advertised by the second PE network device to the first PE network device.

3. The method of any of claims 1-2, further comprising:
prior to detecting the link failure of the link that couples the first PE network device and the CE network device:
sending, by the first PE network device and to the second PE network device, respective egress protection labels of the first PE network device for each Ethernet segment that includes the first PE network device; and
receiving, by the first PE network device and from the second PE network device, respective egress protection labels of the second PE network device for each Ethernet segment that includes the second PE network device.

4. The method of claim 3, the method further comprising:
storing, by the first PE network device, the egress protection label in a Border Gateway Protocol (BGP) extended community of an Auto-Discovery (AD) route per Ethernet Segment Identifier (ESI) message;
sending, by the first PE network device and to the second PE network device, the AD route per ESI message.

5. The method of any of claims 1-4, further comprising:
configuring, by the first PE network device and in a forwarding unit of the first PE network device, a primary next hop for the Ethernet segment and a backup next hop for the Ethernet segment, wherein the primary next hop is configured to forward the BUM network packets to the CE network device prior to the link failure, wherein the backup next hop is configured to apply the egress protection label to the BUM network packets in response to detecting the link failure;
forwarding, by the first PE network device and prior to the link failure, the BUM network packets to CE network device using the primary next hop; and
in response to detecting the link failure of the link that couples the first PE network device and the CE network device, forwarding, by the first PE network device, the BUM network packets to the second PE network device using the backup next hop.

6. The method of any of claims 1-5,
wherein the CE network device is a first CE network device,
wherein the Ethernet segment is a first Ethernet segment,
wherein the first PE network device and the second PE network device are each coupled to a second CE network device in a second Ethernet segment, and
forwarding, by the first PE network device after the link failure, the BUM network packets to the second CE network device, and
wherein the second PE network device does not forward the BUM network packets to the second CE network device in the second Ethernet segment.

7. The method of any of claims 1-6, further comprising:
in response to detecting the link failure of the link that couples the first PE network device and the CE network device, sending by the first PE network device, an Auto-Discovery route withdrawal message to the second PE network device.

8. A device, wherein the device is a first provider edge (PE) network device, the device comprising:
a routing engine that receives an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment;
wherein the routing engine, in response to detecting a link failure of a link that couples the first PE network device and the CE network device, configures forwarding information of the first PE network device to apply the egress protection label to the BUM network packets received by the first PE network device and forward the BUM network packets to the second PE network device; and
a forwarding unit that, in response to receiving the BUM network packets, forwards the BUM network packets with the egress protection label to the second PE network device, such that the egress protection label causes the second PE network device to forward the BUM network packets to the CE network device in the Ethernet segment.

9. The device of claim 8, wherein the forwarding unit attaches to a BUM network packet of the BUM network packets, a label stack comprising:
the egress protection label for the Ethernet segment;
a multicast label, wherein the multicast label instructs the second PE network device to forward the BUM network packet to each of a plurality of CE network devices that are included in the Ethernet segment and directly coupled to the second PE network device; and
a transport label that identifies a label-switch path between the first PE network device and the second PE network device, wherein the transport label was previously advertised by the second PE network device to the first PE network device.

10. The device of any of claims 8-9, wherein prior to detecting the link failure of the link that couples the first PE network device and the CE network device, the forwarding unit:
sends, to the second PE network device, respective egress protection labels of the first PE network device for each Ethernet segment that includes the first PE network device; and
receives, from the second PE network device, respective egress protection labels of the second PE network device for each Ethernet segment that includes the second PE network device.

11. The device of claim 10, wherein the forwarding unit:
stores the egress protection label in a Border Gateway Protocol (BGP) extended community of an Auto-Discovery (AD) route per Ethernet Segment Identifier (ESI) message;
sends, to the second PE network device, the AD route per ESI message.

12. The device of any of claims 8-11,
wherein the routing engine configures, in the forwarding unit of the first PE network device, a primary next hop for the Ethernet segment and a backup next hop for the Ethernet segment, wherein the primary next hop is configured to forward the BUM network packets to the CE network device prior to the link failure, wherein the backup next hop is configured to apply the egress protection label to the BUM network packets in response to detecting the link failure;
wherein the forwarding unit forwards, prior to the link failure, the BUM network packets to CE network device using the primary next hop; and
in response to detecting the link failure of the link that couples the first PE network device and the CE network device, the forwarding unit forwards the BUM network packets to the second PE network device using the backup next hop.

13. The device of any of claims 8-12,
wherein the CE network device is a first CE network device,
wherein the Ethernet segment is a first Ethernet segment,
wherein the first PE network device and the second PE network device are each coupled to a second CE network device in a second Ethernet segment, and
forwarding, by the first PE network device after the link failure, the BUM network packets to the second CE network device, and
wherein the second PE network device does not forward the BUM network packets to the second CE network device in the second Ethernet segment.

14. The device of any of claims 8-13,
wherein in response to detecting the link failure of the link that couples the first PE network device and the CE network device, the forwarding unit sends an Auto-Discovery route withdrawal message to the second PE network device.

15. A computer-readable medium comprising instructions for causing at least one programmable processor of a first PE network device to:
receive an egress protection label that is advertised by a second PE network device, wherein each of the first and second PE network devices are included in an Ethernet segment, wherein the first PE network device is a designated forwarder for Broadcast, Unknown unicast and Multicast (BUM) network packets in the Ethernet segment, and wherein a CE network device is multi-homed to the first and second PE network devices in the Ethernet segment;
in response to detecting a link failure of a link that couples the first PE network device and the CE network device, configure forwarding information of the first PE network device to apply the egress protection label to the BUM network packets received by the first PE network device and forward the BUM network packets to the second PE network device; and
in response to receiving the BUM network packets, forward the BUM network packets with the egress protection label to the second PE network device, such that the egress protection label causes the second PE network device to forward the BUM network packets to the CE network device in the Ethernet segment.
